# EUROPEAN PATENT APPLICATION

(11) **EP 4 429 080 A1**
(43) Date of publication of application: **11.09.2024**
(21) Application number: 23382213.9
(22) Date of filing: 07.03.2023
(51) Int. Cl.: H02K 3/50, H02K 7/18

(54) **PRE-ASSEMBLED BUSBAR MODULE**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

Pre-assembled busbar module for mounting to a stator of a generator of a wind turbine, comprising:
- multiple busbars spanning an angle interval to be covered at the stator,
- multiple busbar support devices, to which the busbars are mounted, distributed over the angle interval,
- a mechanical interface for mounting the pre-assembled busbar module to a mounting surface of the stator, and
- an electrical interface for electrically connecting the busbars to stator windings of the stator.

## Description

The present invention relates to a pre-assembled busbar module for mounting to a stator of a generator of a wind turbine.

Busbars are conventionally employed for conducting high currents, and they are typically comprised of a bar or a strip of metal, such as copper. Busbars are employed for transporting and/or distributing large amounts of electrical power. An exemplary application is a wind turbine generator, wherein the busbar may be connected to the stator of the generator to transport electrical power away from the generator.

The busbars must be positioned in a specific arrangement, having a specific distance to each other. The distance may depend on the voltage level, cooling system, the size of the busbars, and/or the space provided for their installation. Therefore, busbar supports are used to mount the busbars to a mounting surface and to position the busbars in such a specific arrangement.

Busbar arrangements, in particular for wind turbines, are known in the state of the art. For example, EP 3 800 349 A1 discloses a busbar arrangement for a wind turbine generator, wherein the generator comprises a stator and a rotor arranged to rotate around an axis, wherein each busbar is arranged at an individual radial distance from the axis and at an individual axial position along the axis.

Another example of a busbar arrangement with several segments is described in WO 2020/108809 A1. The document discloses a stator for an electrical machine, in particular a generator of a wind turbine. The stator comprises multiple stator segments with several busbar segments connected to the stator coils, wherein segmented busbars are provided by connecting busbar segments of adjacent stator segments which belong to the same phase using segment connection means. The segmented busbars of each phase are distanced from each other.

Traditional busbar installation, however, is based on individual component installation. The busbar support devices and the busbars are positioned and installed individually. Usually, the busbar support devices are placed on a mounting surface, whereafter the busbars are stacked on top of each other, wherein the busbar supports of the busbar support devices and the busbars are arranged successively. Before tightening the whole assembly, the busbar support devices need to be adjusted in order to comply with position requirements. These production steps are very time consuming and are usually done at one production location, which results in a reduced product flow. Due to increased process time, the negative impacts are especially relevant for a state-of-the-art series production, which is used for manufacturing wind turbine generators.

It is therefore an object of the current invention to provide a pre-assembled busbar module which improves the manufacturing of wind turbine generators, in particular reducing process time of individual production processes as well as product flow.

This object is achieved by providing a pre-assembled busbar module for mounting to a stator of a generator of a wind turbine according to the independent claim 1. Advantageous embodiments of the invention are described in the dependent claims.

According to the invention, a pre-assembled busbar module for mounting to a stator of a generator of a wind turbine is provided. The pre-assembled busbar module comprises:
- multiple busbars spanning an angle interval to be covered at the stator,
- multiple busbar support devices, to which the busbars are mounted, distributed over the angle interval,
- a mechanical interface for mounting the pre-assembled busbar module to a mounting surface of the stator, and
- an electrical interface for electrically connecting the busbars to stator windings of the stator.

It is hence proposed to pre-assemble a busbar module already comprising all the busbars, their supports and interfaces facilitating quick and easy mounting on a support surface. By means of such pre-assembled busbar module the production of a wind turbine generator can be improved. The assembly of the busbar module and its installation to the stator of the generator of the wind turbine can be carried out in two individual production processes. The busbar module may be assembled in a first production process at a first production site. Then, the pre-assembled busbar module may be transported and installed at the stator in a second production process at a second production site. Hence, the time-consuming assembly of the busbar module can be outsourced or carried out at a production site different from the one used for installing the pre-assembled busbar module to the stator. This way, the production time of the second production process, respectively the installation, can be significantly reduced as less handling is required. As a result, the product flow can be improved. In other words, the pre-assembled busbar module can be obtained from a supplier as a module, which is ready for installation, to avoid inhouse production and respectively assembly.

The pre-assembled busbar module can be installed to a stator or a segment of the stator, respectively. If, in the following description, it is referred to installation to a stator, it is understood that this also applies to installation to a stator segment.

The busbars of the pre-assembled busbar module are curved and can, in particular, be described as ring segments. An advantage of the curved shape of the busbars is that a plurality of pre-assembled busbar modules can be installed to the stator, in particular respective stator segments, in such way that the modules form a ring following the typical ring-shape of the stator.

The number of busbars in the pre-assembled busbar module may differ with respect to the specific use case. For example, one busbar for each phase may be provided. The number of busbar support devices may differ with respect to the size and weight of the busbars or the currents being transported by the busbars. In a preferred embodiment, the pre-assembled busbar module comprises three busbars and four busbar support devices evenly distributed over the angle interval of the busbars.

Preferably, the mechanical interface, used for mounting the pre-assembled busbar module to the stator, is at least partly provided at one or more of the busbar support devices. Since the busbar support devices are used to position the busbars at a specific distance to each other, it is advantageous to also use the busbar support devices for providing the mechanical interface. Hence, the busbar support devices may be used for both the positioning and the mounting of the busbars. In this manner, busbar support devices provide a dual-function and the mechanical interface does not have to be provided at the busbars, which can therefore have a simple geometry compared to the busbar support devices.

In an embodiment, the mechanical interface comprises mounting means for mounting the busbar support devices to the mounting surface. Such mounting means can be bolts or threaded rods, which are driven into the mounting surface of the stator. Any type of components, suitable to mount the pre-assembled busbar module to the stator may be used as mounting means. It is, however, preferred to use mounting means, which are commonly used to connect a plurality of components.

In an embodiment, at least one of the mounting means at least partly fixates multiple components of the busbar support devices together. By using mounting means not only for mounting the pre-assembled busbar module to the stator, but fixating multiple components of the busbar support devices together, the total number of required mounting means and fastening means can be reduced. This leads to a more efficient and simplified construction of the pre-assembled busbar module.

In preferred embodiments, each busbar support device comprises stackable busbar supports comprising receiving sections for each of the, in particular parallelly running, busbars for supporting the busbars. This allows the busbars to be arranged in a stacked manner in a [ML1] stacking direction, wherein busbar supports of the busbar support devices are positioned between the stacked busbars to provide the respective specific distance.

Each busbar support may advantageously comprise a receiving section for fixating a busbar. The receiving section can be referred to as a recess in the busbar support, which the busbar can be inserted, in particular slid, into. After a second busbar support is stacked onto the busbar support with the first busbar, the first busbar is fixated by means of the two busbar supports compressing the first busbar, hence applying pressure in the stacking direction. The receiving sections of the busbar supports may also serve as a fixation of the busbars in radial direction, referring to the angle interval covered by the curved busbars.

Preferably, the busbar support devices and thus the busbar supports provide an insulation, in particular a rubber band or a polymer, to electrically insulate the busbars from one another and/or the mounting surface. Additionally or alternatively, the busbar support devices and thus the busbar supports may be made from electrically isolating material, in particular EPG (enhanced protective glass) or HGW (German: Hartgewebe) or composite material comprising a resin matrix reinforced with glass fabric. Preferably, such composite material has thermal, mechanical and electrically insulating properties, which are sufficient for this particular application. The composite material can be manufactured by different means such as molding or lamination.

In an embodiment, the busbar supports are fixated to a mounting plate, in particular between the mounting plate and an end plate, by means of fastening members, which are laterally positioned at the busbar supports in a radial direction of the pre-assembled busbar module. The busbar supports, as well as the end plate and the mounting plate, may comprise through holes which are laterally positioned at the busbar supports, the mounting plate and the end plate. Preferably, the fastening members are bolts or threaded rods, which may extend through the through holes, and each busbar support device may comprise two fastening members fixating the busbars by applying pressure to the busbars, in particular between the mounting plate and the end plate, when tightened. In general, any type of fixation component may be used as fastening member. Bolts, however, are preferred.

In further embodiments, each busbar support device may comprise first and second fastening members, in particular bolts, wherein the first fastening member fixates the end plate and the busbar supports to the mounting plate, wherein the second fastening member additionally engages the mounting surface of the stator to fixate the busbar support device to the stator. Hence, the first fastening member does not serve any purpose of mounting the busbar support device, or even the pre-assembled busbar module, to the mounting surface. It may only fixate the busbar support device, in particular the mounting plate and the end plate, as well as the busbars. The second fastening member, however, can be one of the mounting means, as it fixates the busbar support device to the mounting surface of the stator.

As long as the pre-assembled busbar module is not mounted to the stator, the second fastening member cannot apply pressure to the pre-assembled busbar module. Thus, it cannot be used to fixate the busbar support device and the busbars together. However, when the pre-assembled busbar module is mounted to the stator, the second fastening members, which are preferably bolts, are driven into the mounting surface and apply a pressure to fixate the busbars and the busbar support devices while also being used for mounting the pre-assembled busbar module to the stator.

Therefore, the mounting plate of each busbar support may comprise two lateral holes. One of these lateral holes may comprise an internal thread, such that the first fastening member can be fixated to the mounting plate, in particular by means of a threaded connection. The second of the lateral holes, however, may be configured to allow the second fastening member to run through the mounting plate in order to provide a connection to the mounting surface on the side of the mounting plate opposite to the busbars.

Each busbar support device may comprise one or more first and second fastening members. In any case, the mounting plate, the end plate, and the busbar supports need to provide a number of holes which corresponds to the number of first and second fastening members, wherein, in the mounting plate, one hole with an internal thread needs to be provided for each first fastening member and one through hole needs to be provided for each second fastening member.

As described above, the pre-assembled busbar module may not be securely fixated as long as it has not been installed to the stator. To avoid damaging and/or prevent disassembly of the pre-assembled busbar module before the installation process, auxiliary fixating tools may be used. Hence, in a preferred embodiment, the pre-assembled busbar module comprises auxiliary fixating tools for fixating the components of each busbar support device together as long as the mounting means have not been installed. The auxiliary fixating tools can secure the pre-assembled busbar module as it fixates the components of each busbar support device together. Using auxiliary fixating tools, only one bolt per busbar support device, fixating the respective end plate and busbar supports to the mounting plate, may be sufficient to fixate the pre-assembled busbar module.

Preferably, one auxiliary fixating tool may be provided for each busbar support device. Each auxiliary fixating tool may be fixated to the mounting plate of its respective busbar support device such that it can easily be removed after installation of the pre-assembled busbar module to the stator. For example, the auxiliary fixating tool may be fixed to the mounting plate of its respective busbar support device using screws. The fixation may be established by at least one bolt running through the mounting plate, substantially perpendicular to the mounting means.

The auxiliary fixating tool may preferably provide an at least essentially U-shaped frame serving as a clamp to apply pressure between the mounting plate and the end plate of the respective busbar support device. In particular, it may comprise a fixation part, which gets fixated to the mounting plate of the respective busbar support device, as well as a plate, which is fixated to the fixating part by means of two connectors, in particular threaded rods with nuts. When fixated to the busbar support device, the plate may lie flat on the end plate of the busbar support device. This way, the top plate and the mounting plate of the busbar support device can be pressurized towards each other, firmly holding the busbars and busbar supports in between. Since the auxiliary fixating can be designed in a minimalistic way, it can be cheap and quick to manufacture.

In an advantageous embodiment, the busbar support device further supports a neutral conductor, in particular running parallelly to the busbars. Preferably, the electrical interface of the pre-assembled busbar module may comprise additional connectors for the neutral conductor. Providing such a neutral conductor can be advantageous, since it allows to transfer fault currents away from the generator separated from the busbars. In preferred embodiments, the neutral conductor is electrically isolated or insulated from the busbars and the busbar support devices. It may therefore comprise an insulating top layer, for example a paint or a coating or an insulating tape. The neutral conductor may be glued or tied up to the busbar support devices. It may alternatively be fixated to the busbar support devices by means of a form fit or a force fit.

In embodiments, the electrical interface of the pre-assembled busbar module comprises electrical connectors extending from the busbars and/or the neutral conductor to an electrical contact at a free end. The electrical contacts preferably have a flat surface used for electrical connection to the stator windings. All electrical contacts may be orientated in such way that the pre-assembled busbar module can be easily positioned on the mounting surface of the stator without collision of the electrical contacts and winding contacts of the stator. To realize such collision-free positioning, the electrical contacts may be oriented parallel or perpendicular to the mounting surface of the stator.

In case of favorable positioning and orientation of the electrical contacts, the electrical contacts and the winding connections of the stator may touch or almost touch after the pre-assembled busbar module is mounted (mechanical interface) to the mounting surface of the stator.

In a preferred embodiment the electrical contacts are pre-brazed to the busbars. Each busbar may already comprise a number of electrical contacts, required to connect the busbars to the winding contacts. In other words, the electrical contacts may be described as ready-to-braze contacts. This can be advantageous, as the electrical contacts are already connected to the busbars and thus do not need to be connected to the busbars during the installation process of the pre-assembled busbar module. However, the electrical contacts provide a surface for connecting the respective busbar to the respective winding contact by means of brazing or sintering. Therefore, the installation process may be simplified, as the electrical contacts can already be provided in determined positions on the busbars. This results in an easy and quick installation, which reduces process time of the installation of the pre-assembled busbar module to the stator and hence product flow. Since no additional soldering or sintering material is needed, the required storage space may also be reduced.

Preferably, the electrical connectors are located in unsupported sections of the busbars, in particular between busbar support devices or at a side of an outer busbar support device. Consequently, collisions of the busbar support devices or tools acting in their area with the electrical contacts while pre-assembling the busbar module or mounting the pre-assembled busbar module can be avoided. It may also be advantageous to position the electrical contacts with enough distance in circumferential direction regarding the covered angle interval to provide a range of adjustment for the busbar support devices in circumferential direction.

In radial direction, regarding the angle interval covered by the busbars, the electrical contacts are preferably provided on only one side of the busbars, in particular the radially outer side.

In another advantageous embodiment, the pre-assembled busbar module comprises at least one, preferably two, busbar interfaces, which are laterally positioned in a circumferential direction of the pre-assembled busbar module, for mechanically and/or electrically connecting the busbars to busbars of an adjacent pre-assembled busbar module and/or of an electrical connection device for the stator. The busbar interfaces allow to couple two or more pre-assembled busbar modules, in particular the busbars of such modules, together or to connect the busbars of one pre-assembled busbar module to an electrical connection device for the stator. The electrical connection device can be used to transfer the electrical power of the busbars away from the generator, for example by connecting one or more busbar interfaces with the electrical connection device to one or more, preferably three, conductors of a wind turbine. In particular, the connection can be to a power converter of the wind turbine.

The busbar interfaces enable variation of the size of the pre-assembled busbar modules, in particular the size of the angle interval to be covered at the stator. Hence, the pre-assembled busbar modules can be designed as large or small modules, according to the specific requirements, wherein all modules can be interconnected by means of the busbar interfaces, independent of the number of modules.

Preferably, the surface of the busbar interfaces is electrically conductive, wherein the rest of each busbar comprises an electrical insulation, for example a coating or a paint or a layer of insulating tape. Hence, an electrical connection between two busbar interfaces or to a busbar interface can be achieved by means of mechanically connecting two busbar interfaces or a non-insulated conductor and a busbar interface. If there is no need for sintering or soldering material to strengthen the electrical connection, bolts or clamps may be sufficient to connect two busbar interfaces or a connection device and a busbar interface mechanically and electrically. As already mentioned for the ready-to-braze electrical contacts, this simplifies the installation process of the busbar module and may reduce process time and installation time.

To provide a secure mechanical connection between two busbar interfaces, each busbar interface may preferably comprise multiple, in particular four, openings, wherein each of the openings is configured to receive a bolt. In other embodiments, the busbar interfaces of two pre-assembled busbar modules may be mechanically and electrically interconnected by means of a busbar connector, bridging a gap between both busbar interfaces. The busbar connector may be configured to provide a mechanically rigid connection between busbar interfaces. It may alternatively be movable or flexible to provide a connection which can be adapted with respect to given circumstances. For example, bigger or smaller gaps may be bridgeable with the same busbar connector. The busbar connector may comprise a plurality of copper cables or similar insulated or non-insulated conductors.

In alternative embodiments, two busbar interfaces or one busbar interface and one electrical connection device may not be connected by means of bolts, but clamps applying enough mechanical pressure to achieve a sufficient electrical and mechanical connection. The connection, however, may alternatively be established by means of [ML2]brazing or welding.

In a preferred embodiment, the pre-assembled busbar module comprises at least one auxiliary spacing tool being attachable to a busbar interface, preferably by using bolts, for maintaining a spacing of the busbars when the pre-assembled busbar module is not mounted to the stator. Such auxiliary spacing tool can be fixated to the circumferential end portions of the busbars of the pre-assembled busbar module, which are configured to be busbar interfaces. In this manner, the stability of a non-installed pre-assembled busbar module can be further improved. The auxiliary spacing tool can be fixated to a busbar interface with the same connection devices or methods already described for connecting two busbar interfaces or a busbar interface and a connection device.

Preferably, the auxiliary spacing tool is reversibly attachable to the busbar interface. Hence, it is not welded or brazed to the busbar interface. This is advantageous, since the auxiliary spacing tool can simply be removed from the pre-assembled busbar module after said module has been mounted to the mounting surface of the stator.

The auxiliary spacing tool may be made from flat metal sheets welded, glued, or screwed together.

The auxiliary spacing tool may additionally comprise one or more transport mounting means to be mounted to a transport carrier and/or the mounting surface of the stator. The transport mounting means may be oriented identical to the mounting means of the busbar support devices, when the auxiliary spacing tool is attached to the pre-assembled busbar module. Hence, for transportation, the pre-assembled busbar module and its attached auxiliary spacing tools can be mounted to the transport carrier by means of the pre-assembled busbar module's mounting means as well as the auxiliary spacing tool's transport mounting means. Preferably, the pre-assembled busbar module additionally comprises an auxiliary fixating tool for each busbar support device. With the one or more auxiliary spacing tools and the auxiliary fixating tools in combination with the transport carrier, the pre-assembled busbar module can be transported very securely, wherein a movement of the busbars or the busbar support devices relative to one another can be prevented.

The pre-assembled busbar module may be mounted using a method of mounting a pre-assembled busbar module to a stator of a generator of a wind turbine as explained below. The method comprises providing a pre-assembled busbar module with auxiliary fixating tools fixated to each busbar support device and auxiliary spacing tools fixated to each busbar interface of the pre-assembled busbar module. The auxiliary fixating tools and the auxiliary spacing tools are in particular fixated to the pre-assembled busbar module by means of bolts.

Thereafter, the pre-assembled busbar module and its auxiliary fixating and spacing tools are mounted to the stator by means of the mounting means and the transport mounting means, which are both, in particular bolts.

In the next step, the busbar support devices are additionally fixated to the stator by means of the second fastening members.

Finally, as the pre-assembled busbar module is now securely mounted to the stator, all auxiliary fixating and spacing tools are detached from the pre-assembled busbar module. The electrical contacts of the busbar module and a winding of the stator are connected by brazing. The brazing may alternatively take place before the auxiliary tools are detached.

The method may be implemented using a pre-assembled busbar module comprising several auxiliary fixating tools and two auxiliary spacing tools, with which the pre-assembled busbar module is mounted to a transport carrier by means of mounting means and transport mounting means. In order to mount the pre-assembled busbar module to the mounting surface of the stator, the transport carrier needs to be detached from the pre-assembled busbar module before starting the mounting process according to the method described above.

The method may be employed with the pre-assembled busbar module having any of the configurations described herein. The above outlined advantages may also be achieved by the method according to the invention.

The invention further concerns a wind turbine having a generator with a stator, wherein at least one pre-assembled busbar module according to the invention is mounted to the stator.

It is to be understood that the features mentioned above and yet to be explained below can be used not only in the respective combination indicated, but also in other combinations or in isolation, without leaving the scope of the present invention. In particular, the features of the different aspects of the embodiments of the invention can be combined with each other unless noted to the contrary.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a schematic drawing showing a pre-assembled busbar module according to an embodiment,
- Fig. 2: a schematic cross-sectional view of the preassembled busbar module of fig. 1,
- Fig. 3: a schematic drawing of the backside of a mounting plate of a busbar support device,
- Fig. 4: a schematic drawing of a busbar support device with an auxiliary fixating tool according to an embodiment,
- Fig. 5: a schematic drawing of a pre-assembled busbar module with an attached auxiliary spacing tool according to an embodiment,
- Fig. 6: a schematic drawing of a pre-assembled busbar module with electrical connectors connected to stator windings,
- Fig. 7: a schematic drawing of a stator of a wind turbine generator with a plurality of pre-assembled busbar modules according to an embodiment, and
- Fig. 8: a wind turbine according to the invention.

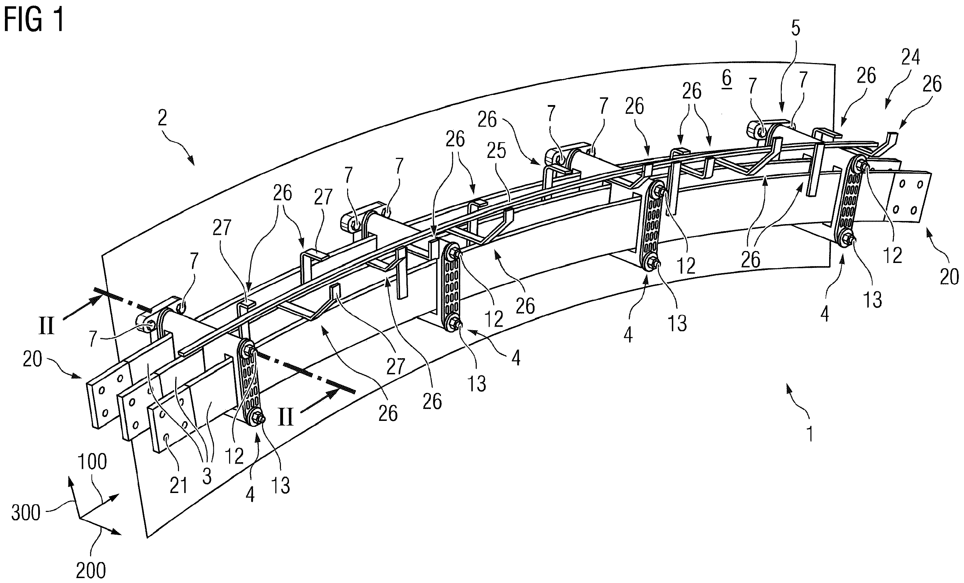

Fig. 1 schematically shows an example of a pre-assembled busbar module 1 for mounting to a stator 2 of a generator of a wind turbine. The pre-assembled busbar module 1 comprises three busbars 3 spanning an angle interval to be covered at the stator 2. The pre-assembled busbar module 1 further comprises four busbar support devices 4 supporting the busbars 3, wherein the busbar support devices 4 are equally distributed over the angle interval of the busbars 3.

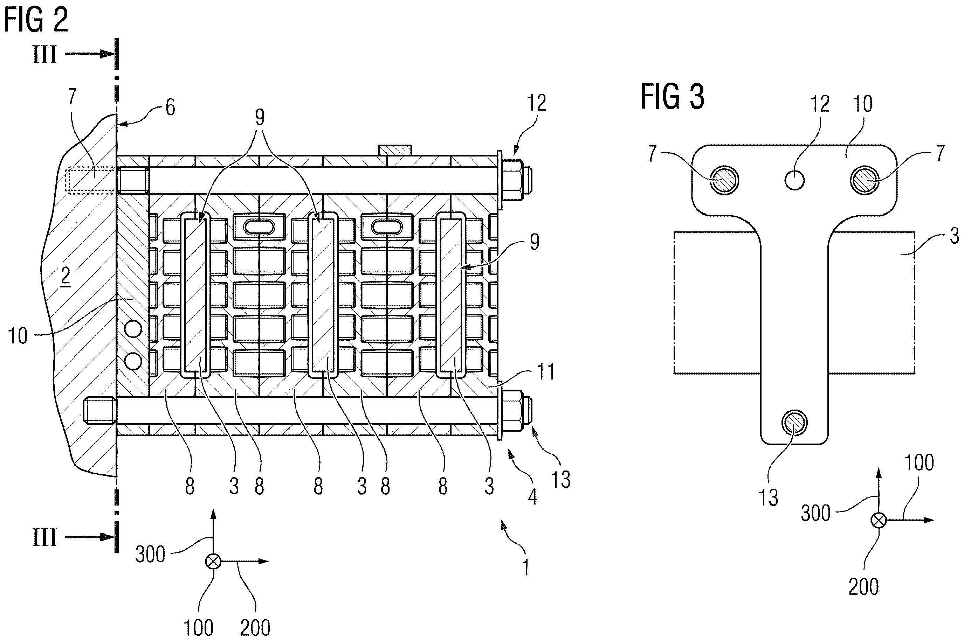

The pre-assembled busbar module 1 further comprises a mechanical interface 5 for mounting the pre-assembled busbar module 1 to a mounting surface 6 of the stator 2. The mechanical interface 5 is provided at the busbar support devices 4 and comprises mounting means 7, in particular bolts, to mount each busbar support device 4 and the busbars 3 to the mounting surface 6 of the stator 2. The busbar support devices 4 comprise several busbar supports 8 with receiving sections 9 configured to hold the busbars 3. An example of a busbar support device 4 is shown as a cross-sectional view in fig. 2.

In the following, more features of the exemplary pre-assembled busbar module 1 od fig. 1 will be described with reference to fig. 2 to 6. For better understanding of the figures, a coordinate system shows three directions (axial direction 200, circumferential direction 100 and radial direction 300) .

Fig. 2 shows an example of a busbar support device 4 according to the invention. The busbar support device 4 comprises a plurality of busbar supports 8 with receiving sections 9 stacked onto each other in axial direction 200. Further, a mounting plate 10 and an end plate 11 are provided, to which the busbars 3 and the busbar supports 8 are fixated by a first fastening member 12 and second fastening member 13. The first fastening member 12 and second fastening member 13 may be bolts.

Fig. 2 exemplarily shows the first fastening member 12 being a rod with threaded end portions. Advantageously, no thread of the fastening member 12 contacts the inner surface of the holes of the busbar supports 8. The threads of the first fastening member 12 are only provided where the member 12 extends in the mounting plate 10 and on the portion right of the end plate 11. [ML3]The second fastening member 13 may be designed in the same way as the first fastening member 12 and only provide threaded portions in the portion of the fastening member 13 which is driven into the stator 2 and which is to the right (outside) of the end plate 11.

The first fastening member 12 fixates the end plate 11 and the busbar supports 8, was well as the busbars 3, to the mounting plate 10, whereas the second fastening member 13 additionally engages the mounting surface 6 of the stator 2 to fixate the busbar support device 4 to the stator 2. Hence, the second fastening member 13 does not apply any pressure to the busbar support device 4 in axial direction 200 when the pre-assembled busbar module 1 is not mounted to the stator 2.

As can be seen in fig. 1 and 2, the second fastening member 13 functions as one of the mounting means 7, which fixate the busbar support devices 4 to the mounting surface 6. It is beneficial that the second fastening member 13 not only fixates the busbars 3 and the busbar support device 4 in axial direction 200, but also serves as one of the mounting means 7. As a result of the dual-function of the second fastening member 13, less mounting means 7 are needed and the number of required parts of the pre-assembled busbar module 1 is reduced.

The busbars 3 are arranged parallelly to each other in axial direction 200 and are held in the busbar support's 8 receiving sections 9, which may be described as recesses arranged in the busbar supports 8. In the shown embodiment the recesses of two busbar supports 8 form one receiving section 9. Alternatively, a receiving section 9 may be formed by the recess of only one busbar support 8 and a flat surface a second busbar support 8 on the opposite side in axial direction 200.

For a better understanding of the first and second fastening members 12, 13, fig. 3 shows a schematic drawing of the back surface of the mounting plate 10, which is in contact with the mounting surface 6 of the stator 2 when mounted to the stator 2. The two mounting means 7, already shown in fig. 1, protrude the mounting plate 10 and are driven into the mounting surface 6 of the stator 2. The fastening member 12, already shown in fig. 2, is threaded to the mounting plate 10 but does not protrude the mounting plate 10 opposite to the busbars 3 in axial direction 200. Therefore, an internal thread is provided in the hole of the mounting plate 10, which the first fastening member 12 is threaded into. Finally, fig. 2 shows the left end of the second fastening member 13 protruding the mounting plate 10 in axial direction 200 on the side opposite to the busbars 3.

In alternative embodiments, the busbar support device 4 may provide more than one first and/or second fastening members 12, 13. The mounting plate's 10 number of holes and holes with internal threads, however, needs to be adapted to the respective number of first and second fastening members 12, 13. The number of holes in the busbar supports 8 and the end plate 11 needs to be adapted accordingly.

As long as the pre-assembled busbar module 1 is not mounted to the stator 2, the second fastening members 13 cannot be used to fixate the busbar support device 4 and the busbars 3 together. Only the first fastening means 12 can be used for fixation. To secure the positioning of the busbars 3 relative to the busbar support devices 4, auxiliary tools are used.

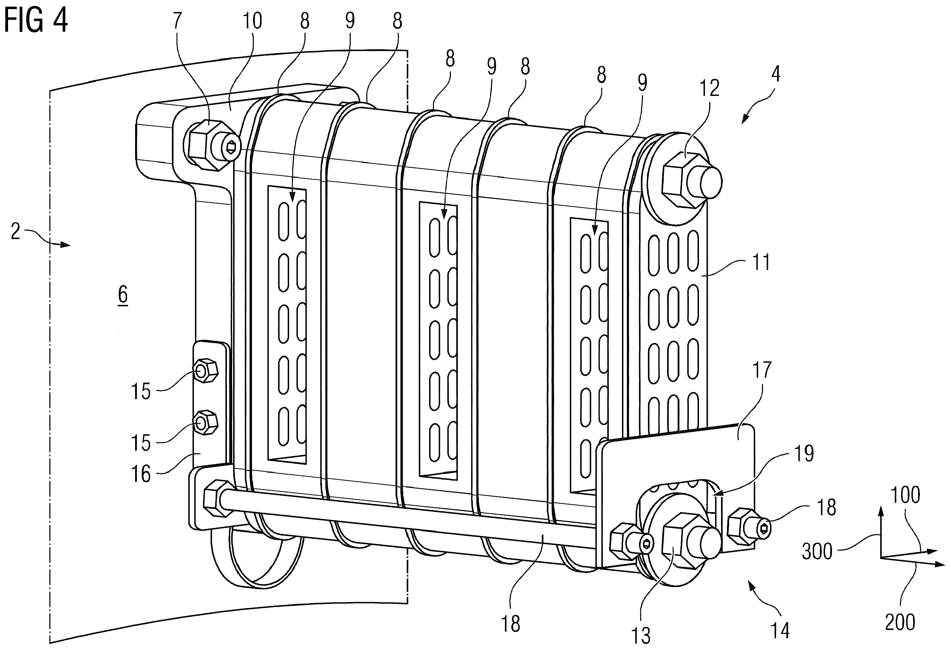

Fig. 4 shows an example of an auxiliary fixating tool 14, which can be attached to the busbar support device 4 by means of two bolts 15 fixating a first component 16 of the auxiliary fixating tool 14 to the mounting plate 10 of the busbar support device 4. The auxiliary fixating tool 14 further comprises a second component 17, which is a u-shaped plate, wherein the first component 16 and the second component 17 are connected to each other by means of threaded rods 18. The u-shape of the plate allows access to insert and fixate the second fastening member 13.

When attached to the mounting plate 10 of the busbar support device 4, the auxiliary fixating tool 14 can be used to apply pressure, in particular in axial direction 200, to fixate the top plate 11, the mounting plate 10 and the busbar supports 8, as well as busbars 3 (not shown in fig. 4) supported in the receiving sections 9, together. As the bolts 15 are oriented perpendicular to the mounting means 7, the auxiliary fixating tool 14 can be detached from the mounting plate 10 and thus the pre-assembled busbar module 1 after the pre-assembled busbar module 1 has been mounted to the stator 2. The first component 16 provides a bracket, which helps to detach the auxiliary fixating tool 14, in particular in radial direction 300.

Before detaching the auxiliary fixating tool 14, the second fastening member 13 can be provided and driven into the mounting surface 6 of the stator 2 to fixate the busbar support device 4 and the busbars 3 (not shown) to the stator 2. The u-shaped plate, as second component 17, is therefore beneficial to provide a recess 19 and hence a free space at the end plate 11 for installation of second fastening member 13.

Referring back to fig. 1, the pre-assembled busbar module 1 further comprises two busbar interfaces 20, which are laterally positioned in the circumferential direction 100. At each of the busbar interfaces 20, the busbars 3 are not electrically conducting, hence not insulated, and comprise four holes 21, which are used for mechanically connecting the busbars 3 to busbars 3 of an adjacent busbar module 1 or an electrical connection device for the stator 2. As the busbars 3 are not isolated at the busbar interfaces 20, an electrical connection can be achieved through mechanical contact. Therefore, bolts and nuts can be used with the holes 21 to connect two adjacent busbar interfaces 20 or one busbar interfaces 20 and an electrical connection device. Instead of bolts and nuts, other connectors, like clamps, may be used.

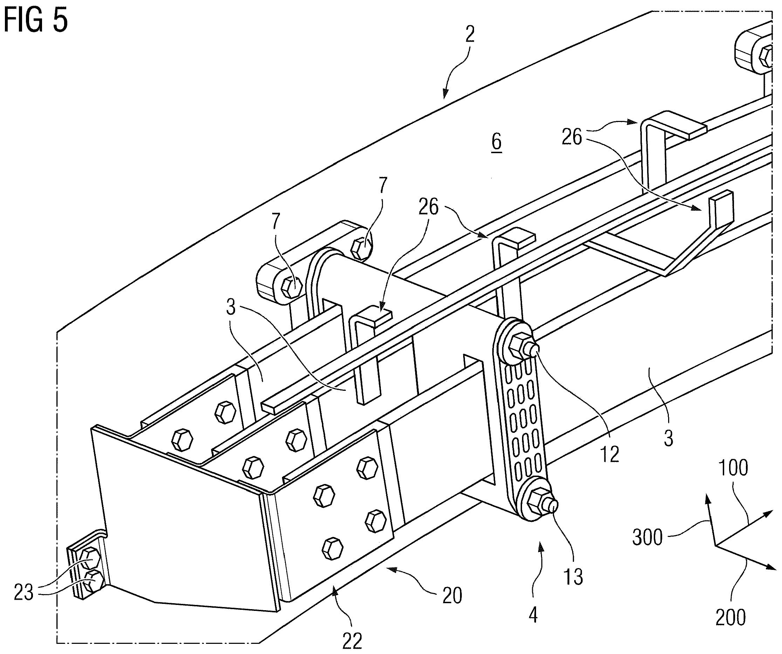

The busbar interfaces 20 can be used to hold the pre-assembled busbars 3 in position as long as the pre-assembled busbar module 1 is not mounted to the stator 2. In this embodiment, an auxiliary spacing tool 22 is used to fixate the busbar interface 20, hence each busbar 3 end section, to maintain the spacing between the busbars 3. An example of such auxiliary spacing tools 22 is shown in fig. 5. In this embodiment, the auxiliary spacing tool 22 comprises several metal plates, which fixate the end portions of the busbars 3. The auxiliary spacing tool 22 further comprises transport mounting means 23, which can be mounted to a transport carrier (not shown) or the mounting surface 6 of the stator 2. As shown in fig. 5, the transport mounting means 23 are preferably bolts.

To realise a secure transport of a pre-assembled busbar module 1, one auxiliary spacing tool 22 is attached to each of the two busbar interfaces 20. The pre-assembled busbar module 1 and the auxiliary spacing tools 22 are then mounted to a transport carrier by means of the mounting means 7 and the transport mounting means 23. Additionally, the beforementioned auxiliary fixating tools 14 are attached to the mounting plates 10 of each busbar support device 4. This way, the pre-assembled busbar module 1 is supported and can be securely transported. Unintended movement of the busbars 3 or the busbar support devices 4 is prevented by means of the auxiliary spacing tools 22 and the auxiliary fixating tools 14, as well as the transport carrier (not shown).

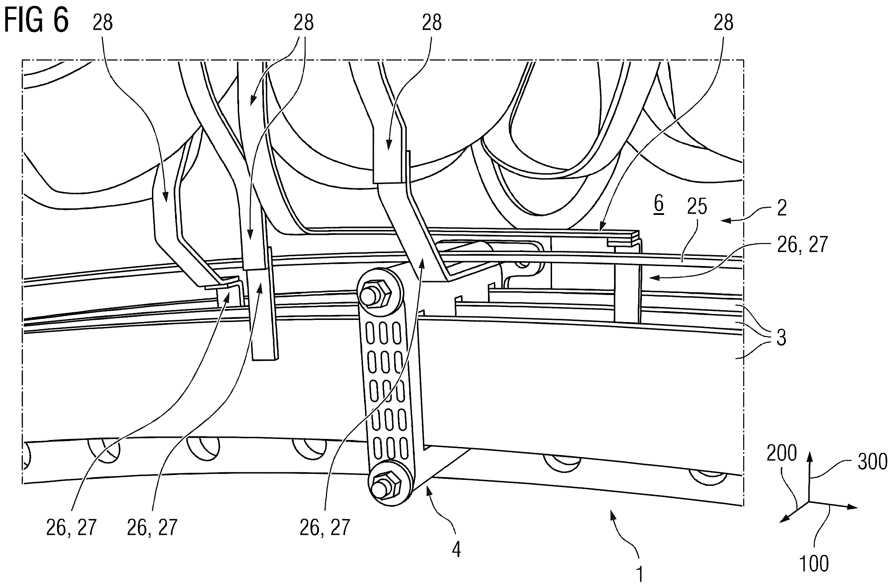

To enable electrical current flow away from the generator, in particular windings of the stator 2, the pre-assembled busbar module 1 shown in fig. 1 further comprises an electrical interface 24. With the electrical interface 24 the busbars 3 of the pre-assembled busbar module 1 can be electrically connected to the stator windings 28 of the stator 2 (see Fig. 6). The pre-assembled busbar module 1 further comprises a neutral conductor 25, which runs parallel to the busbars 3. With the neutral conductor 25 unbalanced voltages produced by the generator or a power converter can be measured during testing. The neutral conductor 25 is glued or tied up to the busbar support devices 4 and is electrically isolated from the busbars 3, as well as the busbar support devices 4.

In order to establish an electrical connection between the busbars 3, and the stator windings 28, as well as the neutral conductor 25 and the stator windings 28, the electrical interface 24 comprises electrical connectors 26 extending from the busbars 3 and the neutral conductor 25 to electrical contacts on free ends 27. An example of an electrical connection of the stator windings 28 and electrical connectors 26 is shown in fig. 6.

The free ends 27 of the electrical connectors 26 are brazed to the stator windings 28 to provide an electrical contact and to transport electrical power away from the stator windings 28.

The electrical contacts 26 are oriented in such way that they touch or almost touch the stator windings 28 when the pre-assembled busbar module 1 is mounted to the stator 2. Hence, there exists an overlap of the electrical connector 26, in particular the free ends 27 of the electrical connector 26, and the stator windings 28 when the pre-assembled busbar module 1 is mounted to the stator 2. As the electrical contacts 26 are already provided on the busbars 3, a faster installation and thus reduced process time and increased product flow can be achieved.

As can be seen in Fig. 1 and Fig. 6, the electrical connectors 26 are located in unsupported sections of the busbars 3, in particular between the busbar supports 4. In this manner, there is enough space in circumferential direction 100 to position the busbar support devices 4 as required.

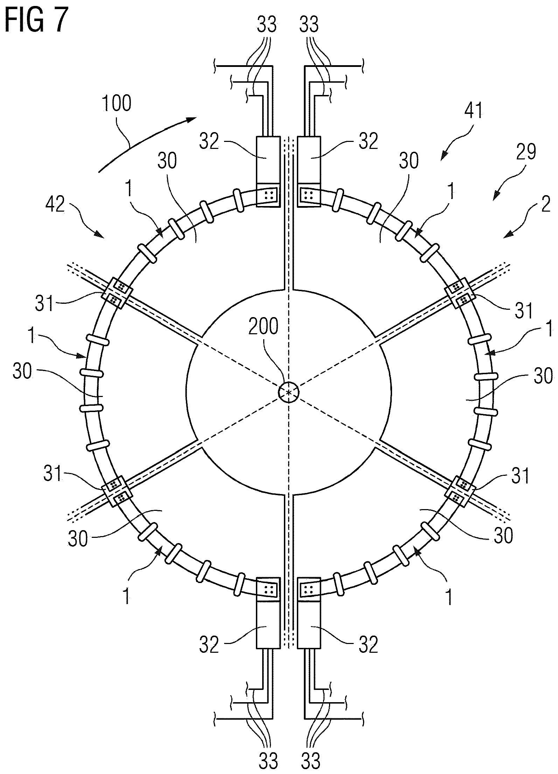

Fig. 7 shows an exemplary drawing of a generator 29 with a stator 2 comprising six stator segments 30, wherein three of the six stator segments 30 respectively form and a winding system that can produce power independently. One busbar system 41, 42 is connected to one of the two winding systems of the stator 2, wherein one pre-assembled busbar module 1 is mounted to each stator segment 30. All pre-assembled busbar modules 1 comprise two busbar interfaces 20 (not shown), wherein the busbar interfaces 20 of two adjacent pre-assembled busbar modules 1 of one busbar system 41, 42 are electrically and mechanically connected by means of busbar connectors 31. In other embodiments, the busbar interfaces 20 of the segments may also, at least in part, be connected to respective connection devices 32, allowing each stator segments 30 to produce power independently of other stator segments 30.

Such a busbar connector 31 may comprise one, in particular arch-shaped, busbar segment being designed to be bolted or clamped or welded to the ends of two busbars 3 of the busbar interfaces 20, which are adjacent in circumferential direction 100. Alternatively, the busbar connector 31 may be a copper cable, in particular with clamps, to connect the end sections of two busbars 3, which are adjacent in circumferential direction 100. The busbar connectors 31 may, however, be braided copper wire straps. Each of the busbar interfaces 20 comprises a number of busbar end sections equal to the number of busbars 3 in the respective pre-assembled busbar module 1. The busbar end sections of two adjacent pre-assembled busbar modules 1 are connected such that one busbar 3 of one pre-assembled busbar module 1 is connected only to one busbar 3 of its adjacent pre-assembled busbar module 1. The busbar interfaces 20 of two adjacent pre-assembled busbar modules may, however, be connected without the use of busbar connectors 31. The adjacent busbar interfaces 20 may just be bolted or screwed together, using the holes 21 of the busbar interfaces 20.

The pre-assembled busbar modules 1 of each busbar systems 41, 42 are interconnected by means of the busbar connectors 31. Thus, the angle intervals of the respective busbars 3 are connected to form a larger, continuous busbar, wherein in each busbar system 41, 42 the number of continuous busbars equals the number of busbars 3 in one pre-assembled busbar module 1.

The neutral conductors 25 (not shown in fig. 7) are connected in such way, that each stator segment 30 has its own neutral conductor 25. The neutral conductors 25 are only connected to the stator windings 28. Thus, contrary to the busbars 3, the neutral conductors 25 of a plurality of pre-assembled busbar modules 1 are not interconnected.

In the purely illustrative example shown in fig. 7, one busbar interface 20 of two pre-assembled busbar modules 1 of each busbar system 41, 42 is electrically and mechanically connected to an electrical connection device 32 of the stator 2. With the electrical connection device 32, the electrical power transferred by the busbars 3 is transported away from the busbars 3 with individual conductors 33, wherein each conductor 33 transports the current of one of the busbars 3. Alternatively, as already indicated above, each stator segment 30 may have its own one or more pre-assembled busbar modules 1 with their own connection devices 32 to be operated independently of other stator segments 30 or groups of stator segments, respectively.

When the pre-assembled busbar modules 1 are mounted to the stator 2, busbar interfaces 20 of two adjacent pre-assembled busbar modules 1 might not contact each other. There might be a gap between the two adjacent busbar interfaces 20 in circumferential direction 100. The busbar connectors 31 can be used to bridge such gap and provide a mechanical and electrical connection of the two adjacent busbar interfaces 20, respectively the adjacent end portions of the busbars 3. In other embodiments, the busbar connectors 31 may be flexible, like copper cables, or extendable to provide an electrical connection but no rigid mechanical connection of two adjacent busbar interfaces 20. This may be beneficial, as one type of busbar connectors 31 may be suitable for use with different sized pre-assembled busbar modules 1.

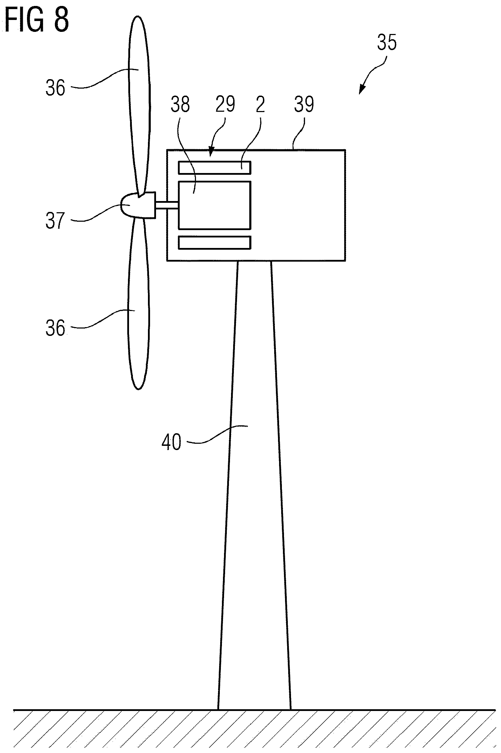

Fig. 8 shows a wind turbine 35 according to the invention. The wind turbine 35 comprises blades 36 mounted to a rotor hub 37, which is coupled to a rotor 38 of the generator 29 with the stator 2. The generator 29 is housed in a nacelle 39, which is supported by a tower 40.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Pre-assembled busbar module (1) for mounting to a stator (2) of a generator (29) of a wind turbine, comprising:
- multiple busbars (3) spanning an angle interval to be covered at the stator (2),
- multiple busbar support devices (4), to which the busbars (3) are mounted, distributed over the angle interval,
- a mechanical interface (5) for mounting the pre-assembled busbar module (1) to a mounting surface (6) of the stator (2), and
- an electrical interface (24) for electrically connecting the busbars (3) to stator windings (28) of the stator (2) .

2. Pre-assembled busbar module (1) according to claim 1,
**characterized in that**
the mechanical interface (5) is at least partly provided at one or more of the busbar support devices (4).

3. Pre-assembled busbar module (1) according to claim 1 or 2,
**characterized in that**
the mechanical interface (5) comprises mounting means (7) for mounting the busbar support devices (4) to the mounting surface (6).

4. Pre-assembled busbar module (1) according to claim 3,
**characterized in that**
at least one of the mounting means (7) additionally at least partly fixates multiple components (8, 10, 11) of the busbar support devices together (4).

5. Pre-assembled busbar module (1) according to claim 4,
**characterized in that**
the pre-assembled busbar module (1) comprises auxiliary fixating tools (14) for fixating the components (8, 10, 11) of each busbar support device (4) together as long as the mounting means (7) have not been installed.

6. Pre-assembled busbar module (1) according to any of the preceding claims,
**characterized in that**
each busbar support device (4) comprises stackable busbar supports (8) comprising receiving sections (9) for each of the, in particular parallelly running, busbars (3) for supporting the busbars (3).

7. Pre-assembled busbar module (1) according to claim 6,
**characterized in that**
the busbar supports (8) are fixated to a mounting plate (10), in particular between the mounting plate (10) and an end plate (11), by means of fastening members (12, 13), which are laterally positioned at the busbar supports (8) in a radial direction (300) of the pre-assembled busbar module (1).

8. Pre-assembled busbar module (1) according to claim 7,
**characterized in that**
each busbar support device (4) comprises first and second fastening members (12, 13), in particular bolts, wherein the first fastening (12) member fixates the end plate (11) and the busbar supports (8) to the mounting plate (10), wherein the second fastening member (13) additionally engages the mounting surface (6) of the stator (2) to fixate the busbar support device (4) to the stator (2) .

9. Pre-assembled busbar module (1) according to any of the preceding claims,
**characterized in that**
the busbar support device (4) further supports a neutral conductor (25), in particular running parallelly to the bus bars (3).

10. Pre-assembled busbar module (1) according to any of the preceding claims,
**characterized in that**
the electrical interface (24) comprises electrical connectors (26) extending from the busbars (3) and/or neutral conductor (25) to an electrical contact at a free end (25).

11. Pre-assembled busbar module (1) according to claim 10,
**characterized in that**
the electrical contacts are located in unsupported sections of the busbars (3), in particular between busbar support devices (4) or at a side of an outer busbar support device (4).

12. Pre-assembled busbar module (1) according to any of the preceding claims,
**characterized in that**
the pre-assembled busbar module (1) comprises at least one, preferably two, busbar interfaces (20), which are laterally positioned in a circumferential direction (100) of the pre-assembled busbar module (1), for mechanically and/or electrically connecting the busbars to busbars (3) of an adjacent pre-assembled busbar module (1) and/or of an electrical connection device (32) for the stator (2).

13. Pre-assembled busbar module (1) according to claim 12,
**characterized in that**
the pre-assembled busbar module (1) comprises at least one auxiliary spacing tool (22) being attachable to a busbar interface (20), preferably by using bolts, for maintaining a spacing of the busbars (3) when the pre-assembled busbar module (1) is not mounted to the stator (2) .

14. Pre-assembled busbar module (1) according to claim 13,
**characterized in that**
the auxiliary spacing tool (22) comprises transport mounting means (23) to be mounted to a transport carrier and/or the mounting surface (6) of the stator (2).

15. Wind turbine (35), comprising a generator (29) with a stator (2), wherein at least one pre-assembled busbar module (1) according to one of the preceding claims is mounted to the stator (2).
